(19) Europäisches Patentamt
European Patent Office
Office européen des brevets

(11) Veröffentlichungsnummer: **0 170 619**
**B1**

(12) **EUROPÄISCHE PATENTSCHRIFT**

(45) Veröffentlichungstag der Patentschrift: **21.06.89**

(51) Int. Cl.⁴: **A 01 N 25/02,** A 01 N 25/30

(21) Anmeldenummer: **85810319.5**

(22) Anmeldetag: **10.07.85**

(54) **Biozide Zusammensetzungen.**

(30) Priorität: **16.07.84 CH 3456/84**

(43) Veröffentlichungstag der Anmeldung:
**05.02.86 Patentblatt 86/6**

(45) Bekanntmachung des Hinweises auf die Patenterteilung:
**21.06.89 Patentblatt 89/25**

(84) Benannte Vertragsstaaten:
**BE DE FR GB IT NL**

(56) Entgegenhaltungen:
**DE-A-2 304 204**
**DE-A-2 506 834**
**DE-A-2 810 998**
**GB-A-1 476 862**

**CHEMICAL ABSTRACTS, Band 96, Nr. 45, 12. April 1982, Seite 239, Zusammenfassung Nr. 117596x, Columbus, Ohio, US; & CS - A - 190 210 (O. ANTALOVA et a.) 15.09.1981**

(73) Patentinhaber: **CIBA- GEIGY AG, Klybeckstrasse 141, CH- 4002 Basel (CH)**

(72) Erfinder: **Grade, Reinhardt, Dr., Tulpenweg 11, D-6140 Bensheim (DE)**



Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die Erfindung betrifft Zusammensetzungen enthaltend s-Triazine, ein Verfahren zur Herstellung dieser Zusammensetzungen, sowie deren Verwendung als Biozide.

2,6-Diamino-4-methylthio-s-triazine sind bekannte Algizide oder Herbizide. Insbesondere beim Einsatz als Algizide treten Löslichkeits- und Verteilungsprobleme auf, da die Substanzen nicht oder nur wenig wasserlöslich sind.

In der Praxis löst man diese Triazine in Verbindungen, die Polyethoxygruppen enthalten, und setzt diese Lösungen dem jeweiligen zu behandelnden wässrigen System zu. Dieses Verfahren gestattet es nicht, mit hochkonzentrierten Triazinlösungen zu arbeiten, da der Wirkstoff beim Zudosieren im wässrigen System sich schlecht verteilt und nur sehr langsam löst oder ausfällt.

Es konnten bislang also nur niedrig konzentrierte Lösungen von Triazinen eingesetzt werden; dadurch wurden dem wässrigen System in der Regel unnötig hohe Mengen an Lösungsmittel zugesetzt.

Aus der GB-PS-1 476 862 ist bekannt, kationische oberflächenaktive Verbindungen zuzusetzen, um die Löslichkeit spezieller triazinhaltiger Mischungen in wasserhaltigen Flüssigkeiten zu erhöhen. Diese Mischungen enthalten eine Kombination von Hexahydro-s-triazinen, die in Wasser Formaldehyd abspalten, Ethylendiamintetraessigsäure oder deren Salze sowie Bis-(trialkylzinn)oxid und eine quaternäre Ammoniumverbindung.

Aus der DE-OS-2 104 232 ist bekannt, dass in speziellen organischen Lösungsmitteln gelöste s-Triazin/S-Alkylthiocarbamatkombinationen durch Zusatz geeigneter Emulgiermittel wasserdispergierbar werden. Das Verfahren erfordert ausgewählte Lösungsmittel und eine spezielle Kombination der Wirkstoffe.

In der CS-PS-190 210 wird die Herstellung stabiler wässriger Triazinsuspensionen beschrieben, indem ein Mischemulgator zugesetzt wird, der aus einer oberflächenaktiven Verbindung und dem Copolymer des Ethylenoxids mit dem Propylenoxid (Slovanik M 640) besteht.

Es wurde jetzt gefunden, dass s-Triazine beim Zudosieren in wässrige Systeme nicht die vorher beschriebenen Nachteile des schlechten Lösens besitzen, wenn konzentrierte Lösungen von s-Triazinen in gewissen polyethoxylierten Verbindungen hergestellt werden und als dritte Komponente ein ausgewähltes Tensid zugesetzt wird.

Die Erfindung betrifft Zusammensetzungen enthaltend

a) 30 bis 80 Gewichtsteile eines Polyethylenglykol-polypropylen-glykolkondensates oder einer Verbindung der Formel I

$$R'-O-[CHR''-CH_2-O]_n-H \qquad (I),$$

worin n die ganzzahligen Werte von 1 bis 12 annimmt, worin R' Wasserstoff, $C_1$-$C_{20}$Alkyl oder Phenyl bedeutet oder durch ein oder zwei $C_1$-$C_{12}$Alkyl substituiertes Phenyl ist, und worin R'' Wasserstoff oder Methyl ist, und

b) 15 bis 40 Gewichtsteile eines oder mehrerer s-Triazine der Formel II

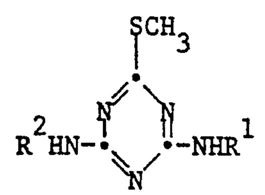
(II),

worin $R^1$ und $R^2$ unabhängig voneinander $C_2$-$C_6$Alkyl oder $C_3$-$C_5$Cycloalkyl bedeuten, und

c) 0,5 bis 25 Gewichtsteile eines kationischen Tensids der Formel (III) oder (IV)

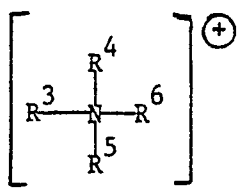
$X^{\ominus}$ (III),
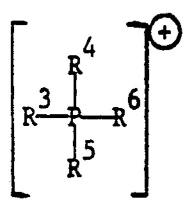
$X^{\ominus}$ (IV),

worin $R^3$ und $R^4$ unabhängig voneinander $C_1$-$C_6$Alkyl, $C_3$-$C_7$Cycloalkyl, Phenyl, $C_7$-$C_9$Aralkyl oder $C_7$-$C_9$Alkaryl sind, oder worin $R^3$, $R^4$ und $R^6$ im Falle der Formel III zusammen mit dem gemeinsamen Stickstoffatom einen Pyridinring bilden, worin $R^5$ $C_8$-$C_{22}$Alkyl bedeutet, worin $R^6$ die Bedeutungen von $R^3$ oder $R^5$ besitzt, und worin

X Fluor, Chlor, Brom, Iod, Cyanid, Cyanat, Thiocyanat oder Carboxylat einer $C_1$-$C_4$Carbonsäure ist.

R' ist als $C_1$-$C_{20}$Alkyl vorzugsweise geradkettig und bedeutet dann beispielsweise Methyl, Ethyl, n-Propyl, n-Butyl, n-Pentyl, n-Hexyl, n-Heptyl, n-Octyl, N-Nonyl, n-Decyl, n-Undecyl, n-Dodecyl, n-Tetradecyl, n-Hexadecyl, n-Octadecyl oder n-Eicosyl. Bevorzugt wird R' als geradkettiges $C_8$-$C_{18}$Alkyl und ganz besonders als geradkettiges $C_{12}$-$C_{18}$Alkyl.

Als durch ein $C_1$-$C_{12}$Alkyl substituiertes Phenyl bedeutet R' beispielsweise o-, m- oder p-Methyl-, -Butyl-, -Hexyl-, -Octyl-, -Nonyl-, -Decyl- oder -Dodecylphenyl. Bevorzugt werden die p-Derivate und ganz besonders p-Nonylphenyl.

R' bedeutet vorzugsweise Phenyl.

Der Index n ist vorzugsweise 4 bis 12 und ganz besonders bevorzugt 4 bis 8 (mittlerer Ethoxylierungsgrad).

$R^1$ und $R^2$ bedeuten als $C_2$-$C_6$Alkyl beispielsweise Ethyl, n-Propyl, n-Butyl, n-Pentyl, n-Hexyl, Isopropyl, sek-Butyl, tert.Butyl, tert.Pentyl, 1,2-Dimethylpropyl oder 1,1-Dimethylbutyl. Bevorzugt werden Ethyl, tert.Butyl, tert.Pentyl, 1,2-Dimethylpropyl oder 1,1-Dimethylbutyl.

$R^1$ und $R^2$ als $C_3$-$C_5$Cycloalkyl bedeuten beispielsweise Cyclopropyl, Cyclobutyl oder Cyclopentyl. Bevorzugt wird Cyclopropyl.

$R^3$, $R^4$ und $R^6$ als $C_1$-$C_6$Alkyl bedeuten beispielsweise Methyl, Ethyl, n-Propyl, n-Butyl, n-Pentyl, n-Hexyl, Isopropyl, sek.Butyl, tert.-Butyl, tert.Pentyl oder 1,2-Dimethylpropyl. Im Falle der Verbindung der Formel III sind $R^3$, $R^4$ und $R^6$ vorzugsweise Methyl. Im Falle der Verbindung der Formel IV bedeuten $R^3$, $R^4$ und $R^6$ vorzugsweise n-Butyl.

Als $C_3$-$C_7$Cycloalkyl bedeuten $R^3$, $R^4$ und $R^6$ beispielsweise Cyclopropyl, Cyclobutyl, Cyclopentyl, Cyclohexyl oder Cycloheptyl. Besonders bevorzugt wird Cyclohexyl.

$R^5$ und $R^6$ als $C_8$-$C_{22}$Alkyl bedeuten beispielsweise n-Octyl, n-Nonyl, n-Decyl, n-Undecyl, n-Dodecyl, n-Tetradecyl, n-Hexadecyl, n-Octadecyl, n-Eicosyl oder n-Docosyl. Besonders bevorzugt werden $R^5$ und $R^6$ als $C_{10}$-$C_{18}$Alkyl und ganz besonders als $C_{10}$-$C_{16}$Alkyl.

$R^3$, $R^4$ und $R^6$ sind im Falle der Verbindung IV vorzugsweise Phenyl oder n-Butyl; im Falle der Verbindung III bedeuten diese Reste vorzugsweise Methyl.

X als Carboxylat einer $C_1$-$C_4$ Carbonsäure bedeutet beispielsweise Formiat, Acetat, Propionat oder Butyrat.

Besonders bevorzugt werden Zusammensetzungen enthaltend 40 bis 60 Gewichtsteile eines Polyethylenglykol-polypropylenglykolkondensates oder einer Verbindung der Formel I, wie oben beschrieben, 30 bis 40 Gewichtsteile eines oder mehrerer s-Triazine der Formel II, wie oben beschrieben und 5 bis 25 Gewichtsteile eines kationischen Tensids, wie oben beschrieben. Als zusätzliche Komponente kann 1 bis 10 Gewichtsteile Wasser und/oder ein $C_1$-$C_5$Alkohol zugegeben werden.

Als $C_1$-$C_5$Alkohol lassen sich verwenden: Methanol, Ethanol, Propanol, Isopropanol, Butanol, sek.Butanol, tert.Butanol, Pentanol oder tert.Pentanol. Besonders bevorzugt werden Ethanol oder Isopropanol.

Ebenfalls bevorzugt werden Zusammensetzungen enthaltend Verbindungen der Formel II, worin $R^1$ und $R^2$ unabhängig voneinander Ethyl, Isopropyl, tert.Butyl, 1,2-Dimethylpropyl oder Cyclopropyl bedeuten.

Bevorzugt werden Zusammensetzungen enthaltend Verbindungen der Formel II, worin $R^2$ verzweigtes $C_3$-$C_6$Alkyl oder Cyclopropyl ist.

Auch werden Zusammensetzungen bevorzugt, die Verbindungen der Formel II enthalten, worin $R^1$ Ethyl oder Cyclopropyl ist und worin $R^2$ tert.Butyl, Isopropyl oder 1,2-Dimethylpropyl bedeutet.

Ebenfalls von Interesse sind Zusammensetzungen enthaltend Verbindungen der Formel II und $R^1$ als Cyclopropyl und $R^2$ als tert.Butyl.

Bevorzugt sind Zusammensetzungen enthaltend eine Verbindung der Formel II, worin $R^1$ Ethyl und $R^2$ 1,2-Dimethylpropyl bedeutet.

Ferner interessieren Zusammensetzungen, die als tensidische Komponente Verbindungen der Formel III und/oder der Formel IV enthalten, worin $R^3$ und $R^4$ unabhängig voneinander $C_1$-$C_6$Alkyl, Phenyl, Benzyl oder Tolyl bedeuten, oder worin $R^3$, $R^4$ und $R^6$ zusammen mit dem Stickstoffatom der Verbindung der Formel III einen Pyridinring bilden, worin $R^5$ $C_8$-$C_{16}$Alkyl ist, worin $R^6$ die Bedeutungen von $R^3$ oder $R^5$ besitzt, und worin X Brom oder Chlor bedeutet.

Ganz besonders bevorzugt werden Zusammensetzungen enthaltend Verbindungen der Formel III, worin $R^3$ und $R^4$ Methyl, und/oder der Formel IV, worin $R^3$ und $R^4$ unabhängig voneinander n-Butyl oder Phenyl sind, oder worin $R^3$, $R^4$ und $R^6$ zusammen mit dem Stickstoffatom der Verbindung der Formel III einen Pyridinring bilden, worin $R^5$ $C_8$-$C_{14}$Alkyl ist, worin $R^6$ die Bedeutungen von $R^3$ oder $R^5$ besitzt, und worin X Chlor bedeutet.

Bevorzugt werden Zusammensetzungen enthaltend als Komponente c) eine Verbindung der Formel III, worin $R^3$ und $R^4$ Methyl sind, $R^5$ und $R^6$ $C_8$-$C_{16}$Alkyl bedeuten und X Chlor ist.

Bevorzugt werden Zusammensetzungen enthaltend Verbindungen der Formel III, worin $R^3$, $R^4$ und $R^6$ im Falle der Verbindung III Methyl und im Falle der Verbindung IV n-Butyl sind, worin $R^5$ $C_{12}$-$C_{14}$Alkyl ist und worin X Chlor bedeutet.

Ganz besonders bevorzugt als kationische tensidische Komponente c) in den erfindungsgemässen Zusammensetzungen werden Tris-(n-butyl)-tetradecylphosphoniumchlorid, Triphenyldodecylphosphoniumchlorid, Dimethyldidecylammoniumchlorid sowie Dimethyl-benzyltetradecylammoniumchlorid.

Die kationische tensidische Komponente c) soll bei Raumtemperatur in dem jeweiligen Lösungsmittel a) mit einer notwendigen Konzentration löslich sein.

Die Komponenten a), b) und c) der erfindungsgemässen Formulierung sind in der Regel im Handel

erhältliche Produkte oder können nach bekannten Methoden hergestellt werden.

Die erfindungsgemäss einzusetzenden algiziden Wirkstoffe leiten sich vom 2,6-Diamino-4-methylthio-s-triazin ab. Zu diesen Verbindungen zählen beispielsweise:

2,6-Bis-(ethylamino)-4-methylthio-s-triazin
2-Ethylamino-4-ethylthio-6-isopropylamino-s-triazin
2-Ethylamino-4-methylthio-6-tert.butylamino-s-triazin
2-Ethylamino-4-methylthio-6-(1,2-dimethylpropyl)-amino-s-triazin
2-Ethylamino-4-methylthio-6-cyclopropylamino-s-triazin
2,6-Bis-(cyclopropylamino)-4-methylthio-s-triazin
2-tert.Butylamino-4-methylthio-6-cyclopropylamino-s-triazin
2-(1,2-Dimethylpropyl)-amino-4-methylthio-6-tert.butylamino-s-triazin
2-(1,2-Dimethylpropyl)-amino-4-methylthio-6-cyclopropylamino-s-triazin.

Beispiele für langkettig alkylsubstituierte quaternäre Ammonium- oder Phosphoniumverbindungen sind die Fluoride, Chloride, Bromide oder Iodide folgender Kationen:

Tri-(n-butyl)-octylphosphonium
Tri-(n-butyl)-decylphosphonium
Tri-(n-butyl)-dodecylphosphonium
Tri-(n-butyl)-tetradecylphosphonium
Tri-(n-butyl)-hexadecylphosphonium
Tri-(n-butyl)-octadecylphosphonium
Tri-(n-butyl)-eicosylphosphonium
Tri-(cyclohexyl)-decylphosphonium
Tri-(cyclohecyl)-dodecylphosphonium
Tri-(cyclohexyl)-tetradecylphosphonium
Tri-(phenyl)-decylphosphonium
Tri-(phenyl)-dodecylphosphonium
Tri-(phenyl)-tetradecylphosphonium
Tri-(benzyl)-dodecylphosphonium
Tri-(benzyl)-tetradecylphosphonium
Tri-(tolyl)-tetradecylphosphonium
Trimethyl-octylammonium
Trimethyl-decylammonium
Trimethyl-dodecylammonium
Trimethyl-tetradecylammonium
Trimethyl-hexadecylammonium
Trimethyl-octadecylammonium
Trimethyl-eicosylammonium
Dimethyl-dioctylammonium
Dimethyl-didecylammonium
Dimethyl-didodecylammonium
Dimethyl-ditetradecylammonium
Dimethyl-dihexadecylammonium
Dimethyl-dioctadecylammonium
Dimethyl-benzyl-dodecylammonium
Dimethyl-benzyl-tetradecylammonium
Dimethyl-benzyl-hexadecylammonium
Tri-(cyclohexyl)-dodecylammonium
Tri-(cyclohexyl)-tetradecylammonium
Tri-(phenyl)-dodecylammonium
Tri-(phenyl)-tetradecylammonium
Tri-(benzyl)-dodecylammonium
Tri-(benzyl)-tetradecylammonium
Tri-(tolyl)-dodecylammonium
Tri-(tolyl)-tetradecylammonium
N-Hexadecylpyridinium
N-Tetradecylpyridinium
N-Dodecylpyridinium

Ein Einsatzgebiet der erfindungsgemässen Zusammensetzungen sind Wasserbecken, wie z. B. Schwimmbecken, Regenwassersammelbecken, Feuerlöschteiche oder Vorratstanks für Nutzwasser. Bei den in solchen Wasserbecken auftretenden Algen handelt es sich vor allem um blaugrüne Algen (black algea) zu denen z. B. Oscillatoria und Phormidium gehören und die vor allem an den Wänden der Becken wachsen, sowie

um grüne Algen, wie z. B. Chlorella und Scenedesmus, die frei schwimmend sind und die grüne Farbe des Wassers verursachen.

Ein weiteres Einsatzgebiet für die erfindungsgemässen Zusammensetzungen sind Kühlwasserkreisläufe, wie sie in z. B. Kraftwerken, chemischen Produktionsanlagen, Wärmepumpen oder Klimaanlagen vorliegen. Eine Schleimbildung durch Bakterien oder Algen in solchen Anlagen verschlechtert den Wärmeübergang und damit die Wirksamkeit des Kreislaufes.

Die erfindungsgemässen Formulierungen können vor ihrem Einsatz mit Wasser oder anderen geeigneten Lösungsmitteln bis zu einer 2 %-igen Lösung verdünnt werden.

Die zur Verhinderung des Algenwachstums benötigte Menge an Triazinverbindungen der Formel II beträgt je nach Anwendungsgebiet etwa 0,1 bis 5 mg/l.

Vorzugsweise verwendet man die Triazinverbindungen in Konzentrationen von 0,5 bis 1,0 mg/l.

Die Erfindung betrifft weiterhin ein Verfahren zur Herstellung konzentrierter wasserlöslicher Formulierungen enthaltend a) Polyethylenglykol-polypropylenglykolkondensat oder eine Verbindung der Formel I, wie oben definiert, und b) eines oder mehrere Triazine der Formel II, wie oben definiert, dadurch gekennzeichnet, dass man 30 bis 80 Gewichtsteile der Komponente a) und 15 bis 40 Gewichtsteile der Komponente b) mit 0,5 bis 25 Gewichtsteilen eines kationischen Tensids der Formel (III) oder (IV) mischt.

Ferner betrifft die Erfindung die Verwendung der oben beschriebenen Formulierungen als Biozide in wässrigen oder teilweise wässrigen Systemen; in solchen Fällen kann eine höhere Konzentration der Formulierungen eingesetzt werden, bei der beispielsweise Komponente c) bis zu 100 ppm der Endkonzentration ausmachen kann.

Solche Formulierungen können durch die dem Fachmann bekannte Aktivität der Einzelkomponenten als Schleimverhinderer sowie zur Reinigung eingesetzt werden.

Die erfindungsgemässen Formulierungen können gegebenenfalls noch weitere Zusätze enthalten. Sie können auch zusammen mit diesen Zusätzen eingesetzt werden. Dazu zählen beispielsweise gängige antimikrobiell wirksame Substanzen wie Sulfoniumsalze, Amine, Harnstoffe, Phenole, Aldehyde, Carbonsäuren, Tributylzinnoxid und seine Derivate, N-Oxide, Peroxide, Sulfide, Disulfide, Carbamate, gegebenenfalls halogensubstituierte Carbonsäureamide, Merkaptoverbindungen, wie Merkaptothiadiazole, 2-Merkaptopyridin-1-oxid sowie dessen Na- und Zn-Salz und Dihalogennitriloessigsäureamide oder -propionsäureamide, Iodverbindungen, Chlorhexidin sowie Iso- und Benzisothiazolonderivate.

Insbesondere bei der Bekämpfung von Schadorganismen im Kühlwasser und im Fabrikationswasser können bei der erfindungsgemässen Verwendung der Formulierungen gleichzeitig weitere übliche Hilfsmittel zugesetzt werden, wie z. B. Korrosionsinhibitoren, Kesselsteinverhinderer, Biodispergatoren, Mittel für die Weichmachung des Wassers, Maskierungsmittel, z. B. polymere Phosphite, Phosphate, Amide der Phosphorsäure, Phosphonsäuren, polymere Carbonsäuren von z. B. Acrylsäure oder Maleinsäure, deren Anhydride oder Salze und andere Zusätze.

**Beispiele**

1. - 7. 2 g 2-Ethylamino-4-methylthio-6-(1,2-dimethylpropyl)-amino-s-triazin, 2,5 g polyethoxyliertes Phenol (Index n = 4) und jeweils 0,5 g eines der in der folgenden Tabelle I aufgelisteten Tenside werden gemischt. Man erhält eine klare Formulierung, die sich bei Verdünnung mit Wasser auf 1 bis 10 ppm Wirkstoffkonzentration (s-Triazin) auflöst.

**Tabelle I:** Verwendete Tenside

| Beispiel | Tensid |
|---|---|
| 1 | Tri-(n-butyl)-tetradecylphosphoniumchlorid |
| 2 | Tri-(n-butyl)-dodecylphosphoniumchlorid |
| 3 | Tri-(n-butyl)-decylphosphoniumchlorid |
| 4 | Tri-(n-butyl)-n-tetradecylphosphoniumbromid |
| 5 | Dimethyl-benzyl-n-tetradecylammoniumchlorid |
| 6 | 50 %-ige Formulierung von Dimethyl-didecylammoniumchlorid (30 % $H_2O$, 20 % Isopropanol, 50 % Aktivsubstanz) |
| 7 | N-Dodecylpyridiniumchlorid |

8. 2 g 2-Ethylamino-4-methylthio-6-isopropylamino-s-triazin, 6,3 g polyethoxyliertes Phenol (Index n = 4) und 1,7 g Tri-(n-butyl)-n-tetradecylphosphoniumchlorid werden gemischt. Man erhält eine klare Formulirung, die sich bei Verdünnung mit Wasser auf 1 bis 10 ppm Wirkstoffkonzentration (s-Triazin) auflöst.

9. 2 g 2-Cyclopropylamino-4-methylthio-6-(1,2-dimethylpropyl)-amino-s-triazin, 2,5 g polyethoxyliertes Phenol (Index n = 4) und 0,5 g Tri-(n-butyl)-n-tetradecylphosphoniumchlorid werden gemischt. Man erhält eine klare

Lösung, die sich bei Verdünnung mit Wasser auf 1 bis 10 ppm Wirkstoffkonzentration (s-Triazin) auflöst.

10. - 14. 2 g 2-Ethylamino-4-methylthio-6-(1,2-dimethylpropyl)-amino-s-triazin, 0,5 g Tris-(n-butyl)-tetradecylphosphoniumchlorid und jeweils 2,5 g einer der in der folgenden Tabelle II aufgelisteten Verbindungen werden gemischt. Man erhält eine klare Formulierung, die sich bei Verdünnung mit Wasser auf 1 bis 10 ppm Wirkstoffkonzentration (s-Triazin) auflöst.

**Tabelle II:** Verwendete Lösungsmittel

| Beispiel | Lösungsmittel |
|---|---|
| 10 | Marlophen®P 7 (Ethoxyliertes Phenol) |
| 11 | Marlophen®X (Mono- und Dimethylphenolpolyglykolether) |
| 12 | Marlox®BW 3027 (Fettalkoholpolyalkylenglykolether) |
| 13 | Marlox®FK 69 (Alkylpolyalkylenglykolether) |
| 14 | Nalco Dispersant®SPF-WTB 33 (Polypropylenpolyethylenglykolkondensat) |

r

15. 2 g 2-Ethylamino-4-methylthio-6-(1,2-dimethylpropyl)-amino-s-triazin, 2 g Mono- und Dimethylphenolpolyglycolether (Marlophen®X) und 1 g einer 50 %-igen Formulierung von Dimethyl-didecylammoniumchlorid (30 % $H_2O$, 20 % Isopropanol und 50 % Aktivsubstanz) werden gemischt. Man erhält eine klare Formulierung, die sich bei Verdünnung mit Wasser auf 1 bis 10 ppm Wirkstoffkonzentration (s-Triazin) auflöst.

16. 2 g 2-Ethylamino-4-methylthio-6-(1,2-dimethylpropyl)-amino-s-triazin, 2,9 g Mono- und Dimethylphenolpolyglycolether (Marlophen®X) und 0,1 g einer 50 %-igen Formulierung von Dimethyl-didecylammoniumchlorid (30 % $H_2O$, 20 % Isopropanol und 50 % Aktivsubstanz) werden gemischt. Man erhält eine klare Formulierung, die sich bei Verdünnung mit Wasser auf 1 bis 10 ppm Wirkstoffkonzentration (s-Triazin) auflöst.

17. 2 g 2-Ethylamino-4-methylthio-6-(1,2-dimethylpropyl)-amino-s-triazin, 2,5 g Mono- und Dimethylphenolpolyglycolether (Marlophen®X) und 0,5 g Dimethyl-benzyl-n-tetradecylammoniumchlorid werden gemischt. Man erhält eine klare Formulierung, die sich bei Verdünnung mit Wasser auf 1 bis 10 ppm Wirkstoffkonzentration (s-Trinzin) auflöst.

18. Wirkung gegen Pseudomonas aeruginosa.

Von der in Caso-Pepton Boullion gewachsenen UNK (Übernachtkultur) von Pseudomonas aeruginosa wird soviel in Tyrode gegeben, dass eine Endverdünnung von 1 : 100 000 erreicht wird. Anschliessend werden jeweils 1 000 ppm einer erfindungsgemässen Formulierung (vgl. nachfolgende Tabelle) zugegeben und die Kultur 3 Stunden bei 30°C im Schüttelwasserbad bebrütet. Danach werden aus der Probe 5 µl entnommen und auf Caso-Pepton Agar getropft. Nach einer erneuten 24-stündigen Bebrütung bei 30°C wird visuell nach Wuchs ausgewertet. Die Ergebnisse findet man in der nachfolgenden Tabelle III.

**Tabelle III**

| Formulierung gemäss Beispiel Nr. | 1 | 6 | 10 | 11 | Kontrolle |
|---|---|---|---|---|---|
| Wuchs | - | - | - | - | + |

+ = Wuchs; keine Abtötung
- = kein Wuchs; Abtötung.

Wie man aus der Tabelle III erkennt, können die erfindungsgemässen Formulierungen auch gegen schleimbildende Bakterien wie Pseudomonas aeruginosa eingesetzt werden.

19. Wirkung gegen Algen

Die in Algennährmedium über 14 Tage gewachsenen Kulturen von

Oscillatoria geminata Nostoc spec.
Phormidium foveolarum
Anacystis nidulans
Chlorella vulgaris
Chlorella pyrenoidosa
Scenedesmus spec.
Ulothrix subtilissima
Tribonema aequale

werden in Algennährmedium auf 1 : 100 verdünnt. Danach wird jeweils von einer erfindungsgemässen

Formulierung (Beispiel 1 oder 5) soviel zugegeben, dass eine Konzentration von 1, 2, 4 und 8 ppm erreicht wird (bezogen auf die gesamte Formulierung). Nach einer Bebrütung von 21 Tagen unter Belichtung und Schütteln wird nach Wuchs ausgewertet. Die Ergebnisse sind in der nachfolgenden Tabelle IV aufgelistet.

**Tabelle IV:**

| Formulierung nach Beispiel Nr. | Wuchs bei unterschiedlichen Konzentrationen | | | |
|---|---|---|---|---|
| | 1 ppm | 2ppm | 4 ppm | 8 ppm |
| 1 | (+) | (+) | - | - |
| 5 | (+) | (+) | - | - |

(+) = Wuchs; schwächer als Kontrolle
- = kein Wuchs; angeimpfte Algen auch ausgebleicht.

In einem Kontrollexperiment ohne Zusatz der erfindungsgemässen Formulierungen zeigten die Algen keine Einschränkungen des Wachstums.

Wie aus der Tabelle IV zu erkennen ist, wirken die erfindungsgemässen Formulierungen auf die Algen nicht nur wuchshemmend sondern auch ausbleichend; sie sind also auch algenabtötend.

**Patentansprüche**

1. Zusammensetzungen enthaltend

a) 30 bis 80 Gewichtsteile eines Polyethylenglykol-polypropylenglykolkondensates oder einer Verbindung der Formel I

$$R'-O-[CHR''-CH_2-O]_n-H \qquad (I),$$

worin n die ganzzahligen Werte von 1 bis 12 annimmt, worin R' Wasserstoff, $C_1$-$C_{20}$Alkyl oder Phenyl bedeutet oder durch ein oder zwei $C_1$-$C_{12}$Alkyl substituiertes Phenyl ist, und worin R'' Wasserstoff oder Methyl ist, und

b) 15 bis 40 Gewichtsteile eines oder mehrerer s-Triazine der Formel II

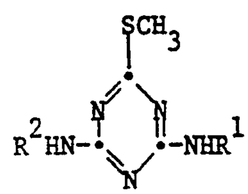

(II),

worin $R^1$ und $R^2$ unabhängig voneinander $C_2$-$C_6$Alkyl oder $C_3$-$C_5$Cycloalkyl bedeuten, und

c) 0,5 bis 25 Gewichtsteile eines kationischen Tensids, der Formel III oder IV

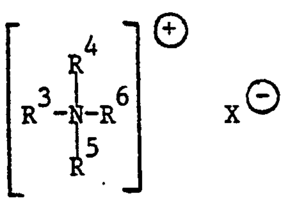

(III),

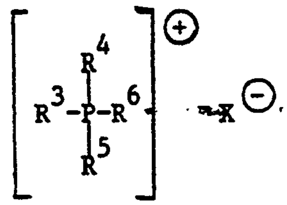

(IV),

worin $R^3$ und $R^4$ unabhängig voneinander $C_1$-$C_6$Alkyl, $C_3$-$C_7$Cycloalkyl, Phenyl, $C_7$-$C_9$Aralkyl oder C-$C_9$Alkaryl sind, oder worin $R^3$, $R^4$ und $R^6$ im Falle der Formel III zusammen mit dem gemeinsamen Stickstoffatom einen Pyridinring bilden, worin $R^5$ $C_8$-$C_{22}$Alkyl bedeutet, worin $R^6$ die Bedeutungen von $R^3$ oder $R^5$ besitzt, und worin

X Fluor, Chlor, Brom, Iod, Cyanid, Cyanat, Thiocyanat oder Carboxylat einer $C_1$-$C_4$Carbonsäure ist.

2. Zusammensetzungen gemäss Anspruch 1, worin R' $C_8$-$C_{18}$Alkyl bedeutet.
3. Zusammensetzungen gemäss Anspruch 1, worin R' Phenyl bedeutet.
4. Zusammensetzungen gemäss Anspruch 1, worin R' p-Nonylphenyl bedeutet.
5. Zusammensetzungen gemäss Anspruch 1, worin n die ganzzahligen Werte von 4 bis 8 annimmt.
6. Zusammensetzungen gemäss Anspruch 1, worin $R^2$ verzweigtes $C_3$-$C_6$Alkyl oder Cylopropyl ist.
7. Zusammensetzungen gemäss Anspruch 1, worin $R^1$ Ethyl oder Cyclopropyl ist und worin $R^2$ tert.Butyl, 1,2-Dimethylpropyl oder Isopropyl bedeutet.
8. Zusammensetzungen gemäss Anspruch 1, worin $R^1$ Ethyl und $R^2$ 1,2-Dimethylpropyl bedeutet.
9. Zusammensetzungen gemäss Anspruch 1 enthaltend 40 bis 60 Gewichtsteile der Komponente a), 30 bis 40 Gewichtsteile der Komponente b) 5 bis 25 Gewichtsteile der Komponente c) und gegebenenfalls enthaltend eine zusätzliche Komponente d), die aus 1 bis 10 Gewichtsteilen Wasser und/oder eines $C_1$-$C_5$Alkohols besteht.
10. Zusammensetzungen gemäss Anspruch 1, worin $R^3$ und $R^4$ unabhängig voneinander $C_1$-$C_6$Alkyl, Phenyl, Benzyl oder Tolyl bedeuten, oder worin $R^3$, $R^4$ und $R^6$ im Falle der Formel III zusammen mit dem gemeinsamen Stickstoffatom einen Pyridinring bilden, worin $R^5$ $C_8$-$C_{16}$Alkyl ist, worin $R^6$ die Bedeutungen von $R^3$ oder $R^5$ besitzt, und worin X Brom oder Chlor bedeutet.
11. Zusammensetzungen gemäss Anspruch 1, worin $R^3$, $R^4$ und $R^6$ im Falle der Formel III Methyl und im Falle der Formel IV n-Butyl sind, worin $R^5$ $C_{12}$-$C_{14}$Alkyl ist und worin X Chlor bedeutet.
12. Zusammensetzungen gemäss Anspruch 1, enthaltend als Komponente c) eine Verbindung der Formel III, worin $R^3$ und $R^4$ Methyl sind, $R^5$ und $R^6$ $C_8$-$C_{16}$Alkyl bedeuten und X Chlor ist.
13. Verfahren zur Herstellung konzentrierter wasserlöslicher Formulierungen gemäss Anspruch 1, dadurch gekennzeichnet, dass man 30 bis 80 Gewichtsteile der Komponente a) und 15 bis 40 Gewichtsteile der Komponente b) mit 0,5 bis 25 Gewichtsteilen einer oberflächenaktiven kationischen Komponente c) mischt.
14. Verwendung der Formulierungen gemäss Anspruch 1 zur Bekämpfung von Schadorganismen in wässrigen oder teilweise wässrigen Systemen.
15. Verwendung der Formulierungen gemäss Anspruch 1 zur Algenkontrolle in wässrigen oder teilweise wässrigen Systemen.

## Claims

1. A composition containing

a) 30 to 80 parts by weight of a polyethylene glycol-polypropylene glycol condensate or of a compound of the formula I

$$R'-O-[CHR''-CH_2-O]_n-H \quad \text{(I)},$$

wherein n assumes the integral values of 1 to 12, wherein R' is hydrogen, $C_1$-$C_{20}$alkyl or phenyl, or phenyl substituted by one or two $C_1$-$C_{12}$alkyl groups, and wherein R'' is hydrogen or methyl; and

b) 15 to 40 parts by weight of one or more s-triazines of the formula II

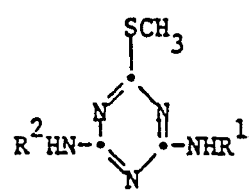

(II),

wherein $R^1$ and $R^2$ independently of one another are each $C_2$-$C_6$alkyl or $C_3$-$C_5$cycloalkyl; and

c) 0.5 to 25 parts by weight of a cationic surfactant of the formula III or IV

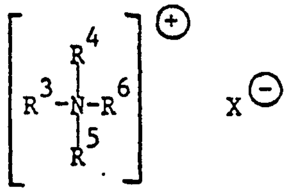 (III), 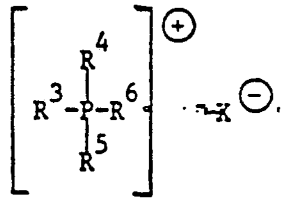 (IV),

wherein $R^3$ and $R^4$ independently of one another are each $C_1$-$C_6$alkyl, $C_3$-$C_7$cycloalkyl, phenyl, $C_7$-$C_9$aralkyl or $C_7$-$C_9$alkaryl, or wherein $R^3$, $R^4$ and $R^6$, in the case of the formula III, form together with the common nitrogen atom a pyridine ring, wherein $R^5$ is $C_8$-$C_{22}$alkyl, wherein $R^6$ has the meanings of $R^3$ or $R^5$, and wherein X is fluorine, chlorine, bromine, iodine, cyanide, cyanate, thiocyanate or carboxylate of a $C_1$-$C_4$carboxylic acid.

2. A composition according to claim 1, wherein R' is $C_8$-$C_{18}$alkyl.

3. A composition according to claim 1, wherein R' is phenyl.

4. A composition according to claim 1, wherein R' is p-nonylphenyl.

5. A composition according to claim 1, wherein n assumes the integral values of 4 to 8.

6. A composition according to claim 1, wherein $R^2$ is branched-chain $C_3$-$C_6$alkyl or cyclopropyl.

7. A composition according to claim 1, wherein $R^1$ is ethyl or cyclopropyl, and wherein $R^2$ is tert-butyl, 1,2-dimethylpropyl or isopropyl.

8. A composition according to claim 1, wherein $R^1$ is ethyl, and $R^2$ is 1,2-dimethylpropyl.

9. A composition according to claim 1, containing 40 to 60 parts by weight of the component a), 30 to 40 parts by weight of the component b), 5 to 25 parts by weight of the component c), and optionally containing an additional component d) consisting of 1 to 10 parts by weight of water and/or of a $C_1$-$C_5$alcohol.

10. A composition according to claim 1, wherein $R^3$ and $R^4$ independently of one another are each $C_1$-$C_6$alkyl, phenyl, benzyl or tolyl, or wherein $R^3$, $R^4$ and $R^6$, in the case of the formula III, form together with the common nitrogen atom a pyridine ring, wherein $R^5$ is $C_8$-$C_{16}$alkyl, wherein $R^6$ has the meanings of $R^3$ or $R^5$, and wherein X is bromine or chlorine.

11. A composition according to claim 1, wherein $R^3$, $R^4$ and $R^6$ in the case of the formula III are methyl, and in the case of the formula IV are n-butyl, wherein $R^5$ is $C_{12}$-$C_{14}$alkyl, and wherein X is chlorine.

12. A composition according to claim 1, containing as component c) a compound of the formula III wherein $R^3$ and $R^4$ are methyl, $R^5$ and $R^6$ are $C_8$-$C_{16}$alkyl, and X is chlorine.

13. A process for producing a concentrated, water-soluble, formulation according to claim 1, which process comprises mixing 30 to 80 parts by weight of component a) and 15 to 40 parts by weight of component b) with 0.5 to 25 parts by weight of a surface-active cationic component c).

14. Use of a formulation according to claim 1 for controlling harmful organisms in aqueous or partly aqueous systems.

15. Use of a formulation according to claim 1 for controlling algae in aqueous or partly aqueous systems.

**Revendications**

1. Compositions qui contiennent:

a) de 30 à 80 parties on poids d'un produit de condensation poly-(éthylène-glycol)-poly-(propylène-glycol) ou d'un composé répondant à la formule I:

$$R'-O-[CHR''-CH_2-O]_n-H \qquad (I),$$

dans laquelle n désigne un nombre entier de 1 à 12, R' représente l'hydrogène, un alkyle en $C_1$-$C_{20}$, un phényle ou un phényle porteur d'un ou de deux alkyles en $C_1$-$C_{12}$, et R'' représente l'hydrogène ou un méthyle,

b) de 15 à 40 parties en poids d'une ou plusieurs s-triazines répondant à la formule II:

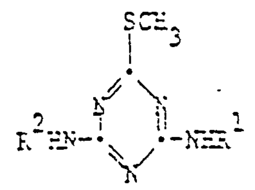

(II)

dans laquelle $R^1$ et $R^2$ représentent chacun, indépendamment l'un de l'autre, un alkyle en $C_2$-$C_6$ ou un cyloalkyle en $C_3$-$C_5$, et

c) de 0,5 à 25 parties en poids d'un surfactif cationique répondant à l'une ou à l'autre des formules III et IV:

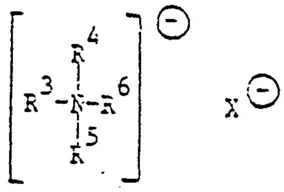

(III),

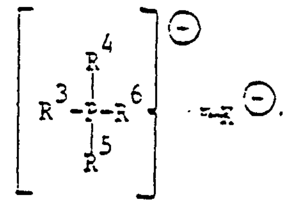

(IV),

dans lesquelles $R^3$ et $R^4$ représentent chacun, indépendamment l'un de l'autre, un alkyle en $C_1$-$C_6$, un cycloalkyle en $C_3$-$C_7$, un phényle, un aralkyle en $C_7$-$C_9$ ou un alkylaryle en $C_7$-$C_9$, ou $R^3$, $R^4$ et $R^6$, dans la formule III, forment ensemble et avec l'atome d'azote commun un cycle de pyridine, $R^5$ représente un alkyle en $C_8$-$C_{22}$, $R^6$ à l'une des significations qui ont été données pour $R^3$ et $R_5$, et X représente le fluor, le chlore, le brome, l'iode, l'ion cyanate, l'ion thiocyanate ou un ion carboxylate d'un acide carboxylique en $C_1$-$C_4$.

2. Compositions selon la revendication 1 dans lesquelles R' représente un alkyle en $C_8$-$C_{18}$.

3. Compositions selon la revendication 1 dans lesquelles R' représente un phényle.

4. Compositions selon la revendication 1 dans lesquelles R' représente un p-nonyl-phényle.

5. Compositions selon la revendication 1 dans lesquelles n désigne un nombre entier de 4 à 8.

6. Compositions selon la revendication 1 dans lesquelles $R^2$ représente un alkyle en $C_3$-$C_6$ ramifié ou un cyclopropyle.

7. Compositions selon la revendication 1 dans lesquelles $R^1$ représente un radical éthyle ou cyclopropyle et $R^2$ un radical tert-butyle, diméthyl-1,2 propyle ou isopropyle.

8. Compositions selon la revendication 1 dans lesquelles $R^1$ représente un éthyle et $R^2$ un diméthyl-1,2 propyle.

9. Compositions selon la revendication 1 qui contiennent de 40 à 60 parties en poids de la composante a), de 30 à 40 parties en poids de la composante b), de 5 à à 25 parties en poids de la composante c) et, éventuellement, une composante d) supplémentaire constituée de 1 à 10 parties en poids d'eau et/ou d'un alcool en $C_1$-$C_5$.

10. Compositions selon la revendication 1 dans lesquelles $R^3$ et $R^4$ représentent chacun, indépendamment l'un de l'autre, un alkyle en $C_1$-$C_6$, un phényle, un benzyle ou un tolyle, ou $R^3$, $R^4$ et $R^6$, dans le cas de la formule III, forment ensemble et avec l'atome d'azote commun un cycle de pyridine, $R^5$ représente un alkyle en $C_8$-$C_{16}$, $R^6$ à l'une des significations qui ont été données pour $R^3$ et $R^5$, et X représente le brome ou le chlore.

11. Compositions selon la revendication 1 dans lesquelles $R^3$, $R^4$ et $R^6$, dans le cas de la formule III, représentent chacun un méthyle et, dans le cas de la formule IV, chacun un n-butyle, $R^5$ représente un alkyle en $C_{12}$-$C_{14}$, et X représente le chlore.

12. Compositions selon la revendication 1 qui contiennent, comme composante c), un composé de formule III dans lequel $R^3$ et $R^4$ représentent chacun un méthyle, $R^5$ et $R^6$ représentent chacun un alkyle en $C_8$-$C_{16}$, et X représente le chlore.

13. Procédé pour préparer des formulations concentrées solubles dans l'eau selon la revendication 1, procédé caractérisé en ce qu'on mélange de 30 à 80 parties en poids de la composante a) et de 15 à 40 parties en poids de la composante b) avec de 0,5 à 25 parties en poids d'une composante surfactive cationique c).

14. Application des formulations selon la revendication 1 à la lutte contre des organismes nuisibles dans des systèmes aqueux ou partiellement aqueux.

15. Application des formulations selon la revendication 1 à la lutte contre des algues dans des systèmes aqueux ou partiellement aqueux.